# EUROPÄISCHE PATENTSCHRIFT

(11) **EP 0 810 121 B1**
(45) Veröffentlichungstag und Bekanntmachung des Hinweises auf die Patenterteilung: **09.08.2000**
(21) Anmeldenummer: 97107502.3
(22) Anmeldetag: 07.05.1997
(51) Int. Cl.: B60R 16/02, G01D 7/00, G01D 13/10, G01P 1/08

(54) **Drehzahlmesser mit Ökonometer**
Tachometer with economy indicator
Tachomètre avec indicateur d'économie

(30) Priorität: 31.05.1996 DE 19621896
(43) Veröffentlichungstag der Anmeldung: 03.12.1997
(73) Patentinhaber: MAN Nutzfahrzeuge Aktiengesellschaft, 80976 München (DE)
(72) Erfinder: Eisermann, Günter, 85757 Karlsfeld (DE); Steiner, Manfred, Dr.- Ing., 85716 Unterschleissheim (DE); Kozel, Peter, Dipl.-Ing., 85235 Odelzhausen (DE)

(56) Entgegenhaltungen:
- EP-A- 0 104 784
- DE-A- 3 309 802
- FR-A- 2 663 117
- US-A- 4 523 457
- US-A- 4 922 239
- PATENT ABSTRACTS OF JAPAN vol. 7, no. 20 (M-188) [1165] , 26.Januar 1983 & JP 57 175432 A (SANWA SEIKI K.K.), 28.Oktober 1982,

## Beschreibung

Die Erfindung betrifft eine Vorrichtung nach dem Oberbegriff des Anspruchs 1.

Aus der DE 30 41 861 A1 ist ein Drehzahlmesser bekannt, der eine mit der Achse der Drehzahlmesseranzeige befestigte Scheibe aufweist, die eine Markierung hat und sich hinter dem Zifferblatt befindet. Durch ein Sichtfenster auf dem Zifferblatt wird, je nach Stellung des Zeigers des Drehzahlmessers, ein entsprechender Teil der Markierung sichtbar. Es kann damit ein Parameter, z. B. Treibstoffverbrauch angezeigt werden. Allerdings ist dieser Treibstoffverbrauch ein rein statischer Wert, der weder die Fahrpedalstellung noch die Emissionen bzw. das instationäre Verhalten des Motors berücksichtigt. Außerdem ist diese "starre" Anzeige nur für einen definierten Motor anwendbar. Für weitere Motorbaugrößen werden weitere unterschiedliche Drehzahlmesser benötigt. Das erhöht den notwendigen Kapitaleinsatz für die Erstausrüstung, die Lagerteilhaltung und die gesamte Logistik.

Aus der DE 28 07 604 C3 ist eine Vorrichtung zur gemeinsamen Anzeige von zwei Betriebsparametern bekannt, dessen Anzeige über eine Leuchtdiodenmatrix mit zweidimensionalem Anzeigenfeld erfolgt. Bei dieser Vorrichtung ist zwar ein Hinweis für die Ist-Betriebsweise mit dynamischen Werten gegeben, aber es ist kein Zusammenhang ersichtlich, ob sich z. B. die Motordrehzahl überhaupt im sparsamen Drehzahlbereich befindet und ob der Fahrer einen Gang höher schalten oder herunterschalten muß. Der Fahrer bekommt nur die Auskunft, wie die Fahrzeugbeschleunigung und der entsprechende Treibstoffverbrauch- hoch oder niedrig - ist.

Aus der DE 38 29 803 C1 ist ein kombiniertes Anzeigegerät bekannt, das eine Drehzahlskala für die Anzeige der Ist-Motordrehzahl, eine Anzeige der optimalen Motordrehzahl in einem Fenster auf dem Zifferblatt oder mittels eines Lichtstrahles, eine Skala in einem weiteren Fenster für die Anzeige des Ladeluft-Druckes und die Anzeige des zu wählenden Getriebeganges in einem weiteren Fenster auf dem Zifferblatt, aufweist.

Mit Ausnahme der Ist-Motordrehzahl sind alle weiteren Anzeigen zu klein, unübersichtlich und überfordern den Fahrer, der sich auf den Verkehr konzentrieren soll. Die Anzeige der optimalen Motordrehzahl mittels eines Lichtstrahles dürfte bei hellen Lichtverhältnissen problematisch, mittels eines zweiten Zeigers verwirrend sein. Das Zifferblatt hat mit Einschränkungen nur für eine Motorbaugröße Gültigkeit.

Die US-PS 4,523,457 offenbart eine Drehzahlmesserskala mit einem der Skala zugeordnetem Ökonomiefeld, das aus dem Regelstangenweg und einem Verbrauchskennfeld des Motors gebildet ist. Aus dem Ökonomiefeld läßt sich nur ein ökonomischer Drehzahlbereich ablesen. Außerdem ist der Drehzahlmesser nur einem Motortyp, der bei einem bestimmten Regelstangenweg einen bestimmten Verbrauch aufweist, zugeordnet. Schließlich ist eine Funktion für den Hinweis von wirkungsvollen Motordrehzahlen für Dauerbremsen überhaupt nicht enthalten.

Der Erfindung liegt die Aufgabe zugrunde, für Motoren unterschiedlicher Baugröße und unterschiedlicher Leistungseinstellung einen einheitlichen Drehzahlmesser mit den unterschiedlichen Drehzahlbereichen und zusätzlich die ökonomische Drehzahl, die abhängig von den momentanen Betriebsdaten, dem Verbrauchskennfeld und von der Fahrpedalstellung ist, anzuzeigen. Zusätzlich soll der erlaubte Motorbremsdrehzahlbereich und die zulässige maximale Motorbremsdrehzahl angezeigt werden.

Die Aufgabe wird erfindungsgemäß durch die Merkmale des Anspruchs 1 gelöst.

Für die unterschiedlichen Fahrzeuge im Angebot eines Fahrzeugherstellers sind Motoren mit einem großen Leistungsbereich erforderlich, die wiederum verschiedene Motorbaugrößen mit verschiedenen Leistungseinstellungen zur Folge haben. Dementsprechend vielfältig ist auch die Bereitstellung, Bevorratung und Ersatzteilhaltung von Drehzahlmessern, die, entsprechend den zugeordneten Motoren, unterschiedliche Nutzdrehzahlen haben. Weiterhin ist bekannt, daß der Fahrereinfluß auf den Treibstoffverbrauch erheblich ist.

Bei den bekannten Drehzahlmessern sind die Drehzahlbereiche, die z. B. die Farben grün, weiß oder gelb und rot haben, auf dem Zifferblatt aufgeschmolzen, die bei Tageslicht ohne Beleuchtung, bei Nacht durch die Drehzahlmesserbeleuchtung sichtbar sind. Das Drehzahlband, das die Drehzahlbereiche und die Leerlaufdrehzahl umfaßt, gilt nur für eine bestimmte Motorbaugröße bzw. Motorbauart, wie beispielsweise für einen Dieselmotor mit 6 Zylindern und 140 kw bei 2400 min⁻¹.

Der erfindungsgemäße Drehzahlmesser ist einheitlich in der Ausgestaltung für alle Motoren. Die Drehzahlbereiche bestehen aus vielen Kästchen (Drehzahlfelder) die Leuchtdioden oder kleine, aufleuchtbare Displays unterschiedlicher Farben sind, die, in Blickrichtung gesehen, hinter dem Zifferblatt liegen. Das Zifferblatt hat im Bereich des Drehzahlbandes einen einheitlichen, z. B. weiß-milchigen, durchscheinenden Ausschnitt, durch den die aufleuchtbaren Drehzahlfelder durchleuchten können. Die Drehzahlfelder werden von einer Ausgabeeinheit (AE), die der elektronischen Recheneinheit (ERE) für die Dieseltreibstoffeinspritzung zugeordnet ist, angesteuert und beim Einschalten des Betriebsstromes (Zündung) zum Aufleuchten gebracht und haben unterschiedliche Farben, wie z. B. grün für den verbrauchsgünstigen, weiß oder gelb für den nicht verbrauchsgünstigen und rot für den zu meidenden Drehzahlbereich. Da, wie erwähnt, die Motoren sehr unterschiedliche Drehzahlbereiche haben und sich die verschiedenen Farben der Drehzahlfelder überschneiden, ist erfindungsgemäß mindestens in bestimmten Drehzahlbereichen eine parallele Anordnung von LED's bzw. kleinen Displays, z. B. grün, weiß und rot, in einem Drehzahlfeld notwendig. Von der AE werden die entsprechenden LED's bzw. kleinen Displays mit den, zu dem Motor passenden Drehzahlfeldern, die die entsprechenden Farben haben, angesteuert und bei Einschalten des Betriebsstromes aktiviert.

Die Anzeige der für den eingebauten Motor zutreffenden unteren Leerlaufdrehzahl kann in analoger Weise erfolgen. Dazu sind noch weitere LED's oder Displays für die Drehzahlfelder, beispielsweise für Drehzahlen von 500 min⁻¹ bis 800 min⁻¹ erforderlich. Von der AE wird beim Einschalten des Betriebsstromes dann das Drehzahlfeld, das der unteren Leerlaufdrehzahl des eingebauten Motors entspricht, aufgeleuchtet.

Die Anzeige der verbrauchsgünstigsten Drehzahl geschieht erfindungsgemäß wie folgt: Für den bestimmten Motor, der im Fahrzeug eingebaut ist und den die ERE erkennt und abhängig von den momentanen Betriebsdaten wie Ladedruck, Einspritzmenge, Drehzahl, Werte aus dem Verbrauchskennfeld und von der Fahrpedalstellung, wird von der ERE die verbrauchsgünstigste Drehzahl errechnet und mittels der AE die entsprechende Leuchtdiode oder das Display so angesteuert, daß diese abhebend hell zu den anderen Leuchtdioden leuchtet. Das linke und rechte Nachbarfeld neben dem Feld der errechneten Drehzahl soll jeweils nicht so hell wie das Feld der errechneten Drehzahl, aber heller als die restlichen Drehzahlfelder aufleuchten. Die Ist-Drehzahl des Motors wird durch den Zeiger des Drehzahlmessers angezeigt. Wenn die Ist-Drehzahl des Motors höher ist, als die verbrauchsgünstigste, auf dem grünen Drehzahlbereich aufleuchtende Drehzahl, hat der Fahrer die Möglichkeit, z. B. durch Wahl des nächsthöheren Ganges, die Motordrehzahl abzusenken und näher an oder in den angezeigten, verbrauchsgünstigsten Drehzahlbereich zu gelangen. Wenn die Ist-Drehzahl niedriger als die verbrauchsgünstigste Drehzahl ist, so kann der Fahrer den nächst niedrigeren Gang einlegen. Dadurch wird die Motordrehzahl erhöht und die Fahrpedalstellung verändert, so daß die neu errechnete, verbrauchsgünstigste Drehzahl und die Ist-Drehzahl näher aneinander liegen oder sich überdecken. Wenn der Fahrer diese Möglichkeiten häufig nutzt, so ist er sicher, daß er mit dem niedrigstmöglichen Kraftstoffverbrauch fährt.

Der erfindungsgemäße Drehzahlmesser mit Ökonometer kann außerdem zur Anzeige der nutzbaren Motorbremsdrehzahl, in einem Drehzahlfeld der Anzeige des maximal möglichen Drehzahlbereiches und in weiteren Drehzahlfeldern der Anzeige eines noch gut wirksamen Drehzahlbereiches für die Motorbremse und/oder einer Dauerbremse, z. B. Retarder, genutzt werden.

Bei ungefeuertem Motor sind, weil hier nur die Mechanik des Antriebes zu berücksichtigen ist, höhere Motordrehlzahlen zulässig. Damit wird gleichzeitig eine hohe Bremsleistung der Motorbremse und - falls sie eingebaut ist - einer weiteren Dauerbremse (Retarder) erreicht.

Der große Vorteil des erfindungsgemäßen Drehzahlmessers mit Ökonometer ist in diesem Fall, daß diese höhere Motordrehzahl des ungefeuerten Motors angezeigt werden kann. Hierzu wird im Überschneidungsbereich des Drehzahlmessers, in dem jeweils drei Leuchtdioden oder kleine Displays je Drehzahlfeld angeordnet sind, genutzt und ein einseitiges Ausweiten des grünen Drehzahlbereiches in höhere zulässige durch Aufleuchten der grünen LED's oder kleinen Displays anstatt der roten, die für den gefeuerten Betrieb des Motors gelten, ermöglicht. Zusätzlich kann das Drehzahlfeld für den maximal zulässigen Drehzahlbereich, also das letzte grüne Drehzahlfeld, besonders hell aufleuchtbar sein.

Damit der Fahrer nicht verunsichert wird, wenn er bei einer geringen Überschreitung des grünen Drehzahlbereiches plötzlich in den roten Drehzahlbereich kommt, kann erfindungsgemäß zwischen der Anzeige des höchsten grünen Drehzahlfeldes und der Anzeige des niedrigsten roten Drehzahlfeldes mindestens ein Drehzahlfeld nicht aufgeleuchtet werden. In der Anwendung wird man wohl zwei bis vier Drehzahlfelder nicht aufleuchten lassen, je nach Baugröße des Verbrennungsmotors.

In der Zeichnung ist ein Ausführungsbeispiel schematisch dargestellt. Es zeigen:
- Fig. 1: die Drehzahlbereiche eines großen Fahrzeugmotors (V10),
- Fig. 2: die Drehzahlbereiche eines kleineren Motors (R6),
- Fig. 3: einen Ausschnitt aus dem Überschneidungsbereich,
- Fig. 4: Drehzahlbereiche eines großen Motors für Motorbremse und
- Fig. 5: Drehzahlbereiche eines kleineren Motors für Motorbremse.

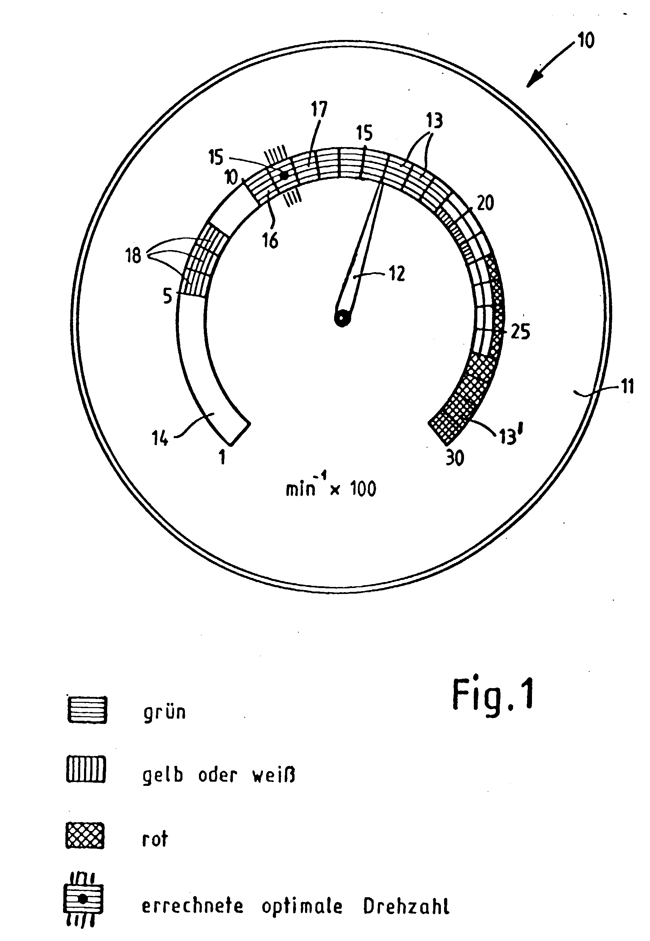

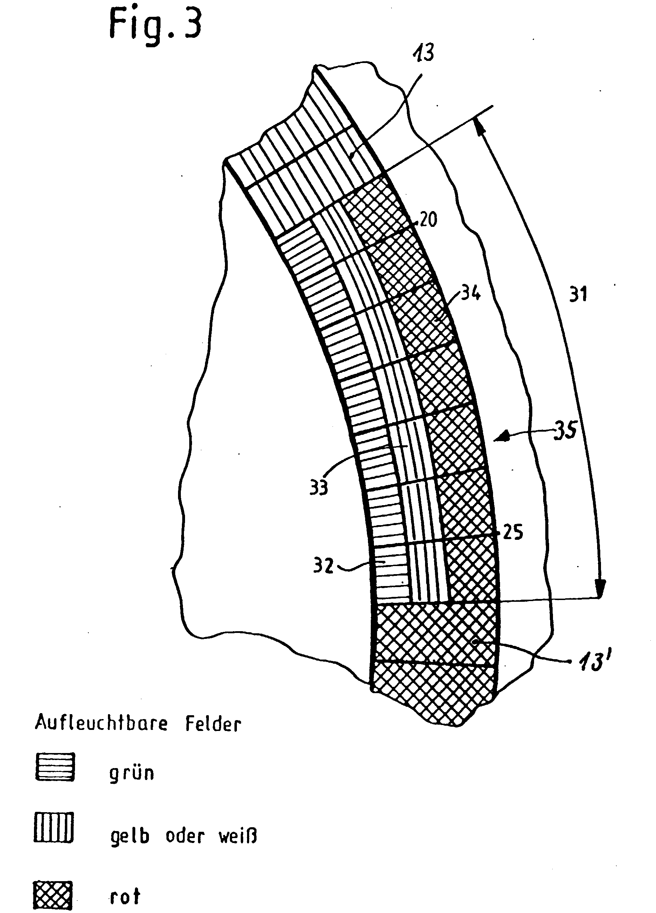

In Fig. 1 ist der Drehzahlmesser mit Ökonometer 10 dargestellt, wie er von der Ausgabeeinheit (AE) der elektronischen Recheneinheit (ERE) eines großen Fahrzeugmotors (V10) angesteuert wird. Auf dem Zifferblatt 11 sind die Ziffern 1 bis 30 aufgedruckt und ein durchsichtiges bzw. durchscheinendes, gekrümmtes Drehzahlband 14 angeordnet. Unter dem Drehzahlband 14 sind Drehzahlfelder 13, 13', 18, 32, 33, 34 im Bereich von 5 bis 30, die aus Leuchtdioden oder kleinen Displays gebildet sind, angeordnet. Im Überschneidungsbereich 31, Fig. 3, hier im Beispiel ist das ein Drehzahlbereich von 1901 min⁻¹ bis 2600 min⁻¹, sind pro Drehzahlfeld 35, Fig. 3, drei Leuchtdioden 32, 33, 34, z. B. grün, gelb und rot angeordnet, die, je nach Baugröße und Leistungseinstellung des Motors, von der AE, die die Kennung aus der ERE erhält, zum Aufleuchten gebracht werden. Unterhalb des Überschneidungsbereiches leuchten die Drehzahlfelder nur grün 13, oberhalb nur rot 13'. Wenn man zusätzlich die Anzeige der für den eingebauten Motor zutreffenden unteren Leerlaufdrehzahl haben will, so sind beispielsweise drei weitere LED's 18 im Drehzahlbereich 500 min⁻¹ bis 800 min⁻¹ vorzusehen, wovon das für den Motor zutreffende Drehzahlfeld von der AE angesteuert wird. Alle Drehzahlfelder 13, 13', 18, 32, 33, 34 im Bereich 5 bis 30, die von der AE angesteuert werden, erhalten bei eingeschaltetem Betriebsstrom eine lichtschwache, aber auch bei Tageslicht sichtbare Beleuchtung, die dem Drehzahlbereich des eingebauten Motors entspricht und aus einem grünen, einem gelben und einem roten Teildrehzahlbereich besteht. Im Fahrbetrieb sind aus der ERE, der elektronischen Dieseleinspritzung, alle motor- und fahrzeugspezifischen Daten des momentanen Betriebes bekannt, wie z. B. Einspritzmenge, Ladedruck, Lufttemperatur, Motordrehzahl und Fahrpedalstellung (= Fahrerwunsch). Aus diesen Parametern und weiteren Werten kann die ERE die optimale Motorbetriebsweise ausrechnen und eine dazu gehörende, verbrauchsgünstigste Motordrehzahl angeben. Diese Motordrehzahl wird durch die AE ausgegeben und erfindungsgemäß mit dem Ökonometer 10 angezeigt, derart, daß ein entsprechendes Drehzahlfeld 15 hell aufleuchtet. Die Schaltung bzw. die AE kann die Ausgabe so formulieren, daß auch die Nachbar-Drehzahlfelder 16, 17 aufleuchten, aber nicht so hell wie das Drehzahlfeld 15 und heller, als die übrigen Drehzahlfelder 13, 13',18, 32, 33, 34. Im Beispiel der Fig. 1 zeigt der Zeiger 12 des Drehzahlmessers mit Ökonometer 10 eine Ist-Drehzahl von 1600 min⁻¹ an. Die ökonomische Drehzahl wird aber im Drehzahlfeld 1101 min⁻¹ bis 1200 min⁻¹ angezeigt, indem die LED 15 hell erleuchtet. Der Fahrer merkt, daß er mit einer zu hohen Drehzahl fährt. Durch das Schalten in einen höheren Gang kann er die Motordrehzahl absenken und mit dem Zeiger 12 näher an die ökonomische Drehzahl 15 herankommen oder diese, je nach Gangabstufung und der neuen Fahrpedalstellung, sogar erreichen. Der Fahrer ist dann sicher, mit minimalstem Treibstoffverbrauch zu fahren.

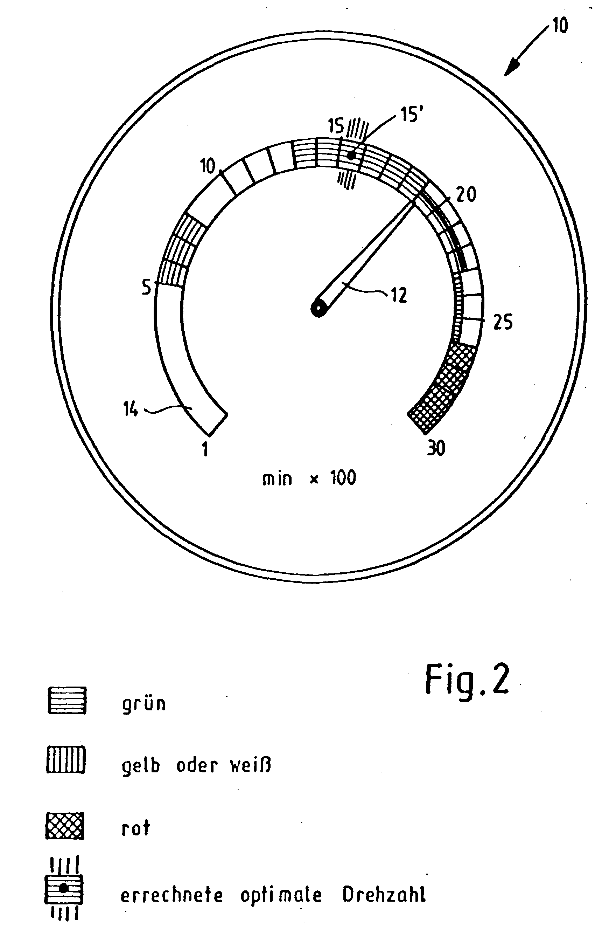

In Fig. 2 ist der gleiche Drehzahlmesser mit Ökonometer 10 dargestellt, bei dem aber die Drehzahlfelder 13, 13', 32, 33, 34 von der AE angesteuert werden, die von der ERE des kleineren Motors (R6) erkannt bzw. errechnet werden. Der Nutzdrehzahlbereich ist hier 1301 min⁻¹ bis 2300 min⁻¹. Der weiße bzw. gelbe Drehzahlbereich ist 2301 min⁻¹ bis 2600 min⁻¹ und der rote Bereich ist über 2600 min⁻¹. Die ökonomische Drehzahl 15' wird im Drehzahlfeld mit 1501 min⁻¹ bis 1600 min⁻¹ angezeigt, indem die LED 15' hell erleuchtet. Die Ist-Motordrehzahl ist mit dem Zeiger 12 mit ca. 1900 min⁻¹ angezeigt. Auch hier wird der Fahrer durch den Ökonometer aufgefordert, die Motordrehzahl abzusenken, dem er mit dem Schalten in einen höheren Gang nachkommen kann.

In der Fig. 3 ist der Überschneidungsbereich 31 vergrößert gezeigt, in dem pro Drehzahlfeld 35 drei Leuchtdioden 32, 33, 34 untergebracht sind, die, je nach eingebautem Motor, entsprechend angesteuert, aufleuchtbar sind. Während bei dem großen Motor (V10, Fig. 1) bereits bei Drehzahlen ab 1901 min⁻¹ bis 2200 min⁻¹ die gelben Leuchtdioden 32 und über 2200 min⁻¹ die roten Leuchtdioden 34, 13' aufleuchten, leuchten beim kleinen Motor (R6, Fig. 2) bis 2300 min⁻¹ die grünen LED's 13, 33, ab 2301 min⁻¹ die gelben LED's 32 und über 2601 min⁻¹ die roten LED's 13' auf. Es ist natürlich auch denkbar, die Anordnung der LED's bzw. kleinen Displays im gesamten Drehzahlbereich je Drehzahlfeld dreifarbig, also drei LED's pro Drehlzahlfeld 35, wie im dargestellten Überschneidungsbereich 31, auszuführen. Dadurch könnten weitere, in der Drehzahl und Leistung noch unterschiedlichere Motoren einbezogen werden und aufgrund höherer Stückzahlen der Drehzahlmesser mit Ökonometer 10, Preisvorteile erreicht werden.

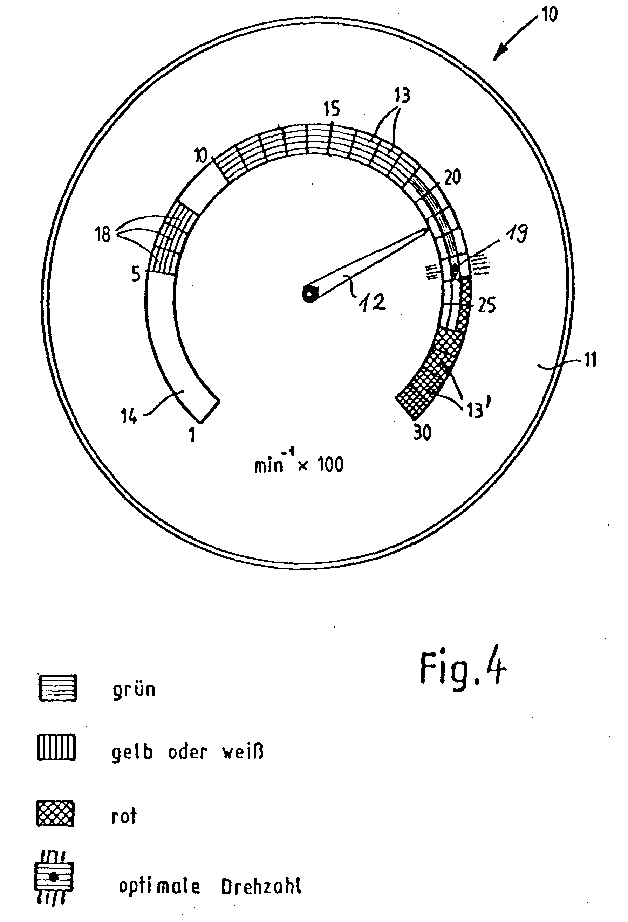

In der Fig. 4 ist, wie in Fig. 1, der Drehzahlmesser mit Ökonometer 10 mit den aufleuchtbaren Drehzahlfeldern, wie diese für den Motorbremsbetrieb von der AE, der ERE für einen großen Fahrzeugmotor (V 10) angesteuert werden, dargestellt. Die für Antriebsdrehzahlen grün 13 ausgeleuchteten Drehzahlfelder bis 1900 min⁻¹, Fig. 1, werden bei Betätigen der Motorbremse und/oder einer Dauerbremse im Überschneidungsbereich 31, Fig. 3, einseitig auf höhere Drehzahlen, hier im Beispiel auf 2400 min⁻¹, Fig. 4, hin erweitert. Der maximale Motorbremsdrehzahlbereich ist von 2301 min⁻¹ bis 2400 min⁻¹ und wird durch die LED 19 oder ein kleines Display 19 hell erleuchtet. Die tatsächliche Motorbremsdrehzahl ist etwa 2150 min⁻¹ und wird durch den Zeiger 12 angezeigt. Es kann sein, daß die angebotene Bremsleistung bei dieser Drehzahl ausreicht. Wenn der Fahrer jedoch mehr Bremsleistung der Motorbremse und/oder einer Dauerbremse benötigt, sollte er einen Gang herunterschalten, daß er in den maximalen Motorbremsdrehzahlbereich 19 kommt. Drehzahlfelder, in denen der Motorbremsbetrieb noch gut ist, z. B. von 1600 min⁻¹ bis 2300 min⁻¹, können heller als die übrigen Drehzahlfelder aber nicht so hell wie das Drehzahlfeld 19 aufleuchtbar sein.

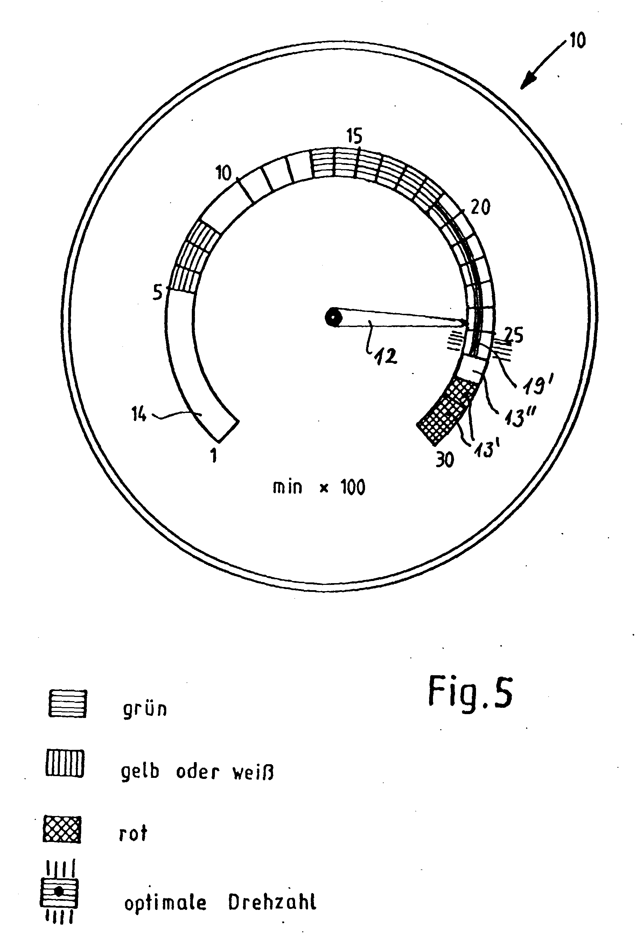

In der Fig. 5 ist die maximale Motorbremsdrehzahl von der AE von 2600 min⁻¹ angesteuert und es leuchtet z. B. das LED 19' für den Drehzahlbereich 2501 min⁻¹ bis 2600 min⁻¹ hell auf. Zwischen dem letzten Drehzahlfeld 19', grün und dem ersten roten Drehzahlfeld 13' ist im Beispiel ein Drehzahlfeld 13" nicht beleuchtet In einer weiteren Ausgestaltung der Erfindung könnten es auch mehrere unbeleuchtete Felder sein. Durch diese Maßnahme wird der Fahrer nicht verunsichert, wenn er geringfügig den grünen Motordrehzahlbremsbereich 19' überschreitet. Der Zeiger 12 zeigt dann nicht sofort in ein rotes Drehzahlfeld 13'. Die roten Drehzahlfelder können für diesen Fall dann die tatsächlich schnell zum Schaden für den Motor führenden Drehzahlen anzeigen, die absolut zu vermeiden sind.

## Patentansprüche

1. Drehzahlmesser mit Ökonometer (10) für Fahrzeuge mit Verbrennungsmotor, mit
- farblich unterschiedlich gekennzeichneten Drehzahlbereichen, die aus Drehzahlfeldern mittels LED's oder kleinen Displays (13, 13', 18, 32, 33, 34) gebildet sind,
- einem beleuchtbaren Zifferblatt (11),
- einem Zeiger,
- einer elektronischen Recheneinheit (ERE), mit der eine elektronisch geregelte Treibstoffzumessung erfolgt und in Abhängigkeit unter anderem von der Fahrpedalstellung die verbrauchsgünstigste Motordrehzahl ermittelbar ist,
dadurch gekennzeichnet, daß
- mindestens in einem bestimmten Drehzahlbereich eine parallele Anordnung (31) von LED's oder kleinen Displays mit verschiedenen Farben vorgesehen ist, vor denen mindestens eine Reihe der LED's oder kleinen Displays (32, 33, 34) sowie die LED's oder kleinen Displays für der Nutzdrehzahlbereich (13, 32, 33) des Motors, durch die elektronische Recheneinkeit, abhängig von der Bangröße und dem Drehzahlbereich des Motors, angesteuert werden und aufleuchtbar sind.

2. Drehzahlmesser mit Ökonometer nach Anspruch 1, dadurch gekennzeichnet, daß die verbrauchsgünstigste Drehzahl (15, 15'), abhängig von der jeweils erkannten Motorbaugröße und den momentanen Betriebsdaten, wie Ladedruck, Einspritzmenge, Drehzahl, Werte aus dem Verbrauchskennfeld und der Fahrpedalstellung, zur Anzeige bringbar ist.

3. Drehzahlmesser mit Ökonometer (10) nach einem oder mehreren der vorhergehenden Ansprüche, dadurch gekennzeichnet, daß die Anzeige der verbrauchsgünstigsten Drehzahl (15, 15') wesentlich heller, als der Rest der aufleuchtbaren Drehzahlfelder (13, 13', 18, 32, 33, 34), aufleuchtbar ist.

4. Drehzahlmesser mit Ökonometer (10) nach Anspruch 3, dadurch gekennzeichnet, daß jeweils das linke und rechte Nachbarfeld (16, 17) der hellerleuchteten, verbrauchsgünstigsten Drehzahl (15, 15'), heller als die restlichen Drehzahlfelder (13, 13', 18, 32, 33, 34), aber nicht so hell wie die verbrauchsgünstigste Anzeige (15, 15'), aufleuchtbar ist.

5. Drehzahlmesser mit Ökonometer (10) nach Anspruch 1, dadurch gekennzeichnet, daß die für den eingebauten Motortyp zutreffende untere Leerlaufdrehzahl durch ein entsprechendes aufleuchtbares Drehzahlfeld (18) anzeigbar ist.

6. Drehzahlmesser und Ökonometer (10) nach Anspruch 1, dadurch gekennzeichnet, daß bei Betätigung einer Dauerbremse der Drehzahlbereich (33) "grün" einseitig in höhere, zulässige Drehzahlen erweitert und mit den aufleuchtbaren Drehzahlfeldern (33) anzeigbar ist.

7. Drehzahlmesser mit Ökonometer (10) nach Anspruch 6, dadurch gekennzeichnet, daß die Anzeige der maximal zulässigen Motorbremsdrehzahl (19, 19') wesentlich heller als der Rest der aufleuchtbaren Drehzahlfelder (13, 13', 18, 34) aufleuchtbar ist

8. Drehzahlmesser mit Ökonometer (10) nach Ansprüche 6 und 7, dadurch gekennzeichnet, daß mehrere Drehzahlfelder (33), die unterhalb der maximal zulässigen Drehzahl (19, 19') liegen und in denen die betätigte Dauerbremse noch gute Wirkung hat, heller als die restlichen Drehzahlfelder (13, 13', 18, 34), aber nicht so hell wie die maximal zulässige Motorbremsdrehzahl (19, 19') aufleuchtbar sind.

9. Drehzahlmesser mit Ökonometer (10) nach den Ansprüchen 6 bis 8, dadurch gekennzeichnet, daß mindestens ein Drehzahlfeld (13"), das zwischen dem letzten grünen (33) und dem ersten roten (13') aufleuchtbaren Drehzahlfeld liegt, nicht aufgeleuchtet ist.

## Claims

1. Revolution counter with econometer (10) for vehicles with combustion engine with
• speed ranges marked in different colours and indicated in speed fields in the form of LEDs or small displays (13, 13', 18, 32, 33, 34)
• a dial (11) which can be illuminated,
• a pointer,
• an electronic calculating unit (ERE) which is used for the electronically controlled metering of fuel and ascertains the lowest-consumption engine speed as a function of, amongst other things, the accelerator pedal position,
characterised in that at least in one determined engine speed range a parallel arrangement (31) of LEDs or small displays in different colours is provided, of which LEDs/displays at least one row of LEDs or small displays (32, 33, 34) as well as the LEDs or small displays for the useful speed range (13, 32, 33) of the engine can as a function of the constructional size and of the engine speed range be triggered by the electronic calculating unit and be illuminated.

2. Revolution counter with econometer according to Claim 1, characterised in that the lowest-consumption engine speed (15, 15') can be displayed as a function of the engine size recognised and of the momentary operating data such as the charge-air pressure, the injection quantity, the engine speed, the values from the fuel consumption map and the accelerator pedal position.

3. Revolution counter with econometer (10) according to one or two of the foregoing Claims, characterised in that the display of the lowest-consumption engine speed (15, 15') is considerably brighter than the rest of the illuminable engine speed fields (13, 13', 18, 32, 33, 34).

4. Revolution counter with econometer (10) according to Claim 3, characterised in that neighbouring fields (16, 17) to the left and right of the more brightly illuminated display for the lowest-consumption engine speed (15, 15') can be illuminated more brightly than the remaining engine speed fields (13, 13', 18, 32, 33, 34) but not so brightly as the display for the lowest-consumption engine speed (15, 15').

5. Revolution counter with econometer (10) according to Claim 1, characterised in that the lower idle speed of the engine model installed can be displayed by means of a corresponding illuminable engine speed field (18).

6. Revolution counter with econometer (10) according to Claim 1, characterised in that upon actuation of a sustained-action brake the speed range (33) "green" can be unilaterally extended into higher permissible speed ranges and be displayed by means of the illuminable engine speed fields (33).

7. Revolution counter with econometer (10) in accordance with claim 6 distinguished by the fact that the display of the maximum permissible engine brake speed (19,19') can be illuminated considerably more brightly than the rest of the illuminated speed fields (13, 13', 18, 34).

8. Revolution counter with econometer (10) in accordance with claim 6 and 7 distinguished by the fact that several speed fields (33) which are beneath the maximum permissible speed (19,19') and in which the operated sustained action brake still has a good effect can be illuminated more brightly than the remaining speed fields (13, 13', 18, 34) but not so brightly as the maximum permissible engine brake speed (19, 19').

9. Revolution counter with econometer (10) in accordance with claims 6 to 8 distinguished by the fact that at least one speed field (13), which is situated between the last green (33) and the first red (13') illuminated speed field, cannot be illuminated.

## Revendications

1. Tachymètre avec économètre (10) pour véhicule équipé d'un moteur à combustion interne comprenant
- des plages de vitesses de rotation à couleurs différentes composées de champs de vitesses de rotation à diodes LED ou petits afficheurs (13, 13', 18, 32, 33, 34),
- un cadran (11) éclairé,
- une aiguille,
- une unité de calcul électronique (ERE) qui assure le dosage à réglage électronique du carburant et détermine, en fonction entre autres de la position de la pédale d'accélérateur, la vitesse de rotation du moteur la plus avantageuse pour la consommation,
caractérisé en ce que
dans au moins une plage déterminée de vitesses de rotation on a une répartition parallèle (31) de diodes LED ou de petits afficheurs avec différentes couleurs dont au moins une rangée de diodes LED ou de petits afficheurs (32, 33, 34) ainsi que les diodes LED ou petits afficheurs pour la plage de vitesses de rotation utiles (13, 32, 33) du moteur sont commandés et éclairés par l'unité de calcul électronique en fonction de la taille du moteur et de sa plage de vitesses de rotation.

2. Tachymètre avec économètre selon la revendication 1,
caractérisé en ce que
la vitesse de rotation (15, 15') la plus avantageuse pour la consommation est affichée en fonction de la taille reconnue respectivement du moteur et des données de fonctionnement instantané telles que la pression d'alimentation, la quantité injectée, la vitesse de rotation, des valeurs prises dans le champ de caractéristiques de consommation et la position de la pédale d'accélérateur.

3. Tachymètre selon l'une ou plusieurs des revendications précédentes,
caractérisé en ce que
l'affichage de la vitesse de rotation (15, 15') la plus avantageuse pour la consommation est beaucoup plus lumineux que celui des autres champs de vitesses de rotation éclairés (13, 13', 18, 32, 33, 34).

4. Tachymètre selon la revendication 3,
caractérisé en ce que
chaque fois le champ voisin à gauche et à droite (16, 17) de celui correspondant à la vitesse de rotation (15, 15') la plus avantageuse pour la consommation et la plus éclairée, sont eux-mêmes éclairés plus clairement que les autres champs de vitesses de rotation (13, 13', 18, 32, 33, 34) mais pas de manière aussi claire que l'affichage (15, 15') le plus avantageux pour la consommation.

5. Tachymètre selon la revendication 1,
caractérisé en ce que
la vitesse de rotation de ralenti, inférieure, correspondant au type de moteur associé, est affichée par un champ de vitesse de rotation (18) éclairé de manière correspondante.

6. Tachymètre selon la revendication 1,
caractérisé en ce qu'
en actionnant un frein permanent la plage de vitesses de rotation (33) « vert » est étendue d'un côté vers les vitesses de rotation autorisées, plus élevées, et est affichée avec les champs de vitesses de rotation (33), éclairés.

7. Tachymètre selon la revendication 6,
caractérisé en ce que
l'affichage de la vitesse de rotation maximale autorisée (19, 19') pour le frein moteur est éclairé beaucoup plus clairement que les autres champs de vitesses de rotation (13, 13', 18, 34).

8. Tachymètre selon les revendications 6 et 7,
caractérisé en ce que
plusieurs champs de vitesses de rotation (33) qui se situent en dessous de la vitesse de rotation maximale autorisée (19, 19') et dans lesquels le frein permanent actionné a encore une bonne efficacité, sont éclairés plus clairement que les autres champs de vitesses de rotation (13, 13', 18, 34) mais pas aussi clairement que le champ (19, 19') correspondant à la vitesse de rotation maximale autorisée pour le frein moteur.

9. Tachymètre selon les revendications 6 à 8,
caractérisé en ce qu'
au moins un champ de vitesse de rotation (13") situé entre le dernier champ vert (33) et le premier champ rouge (13') n'est pas éclairé.
